# EUROPÄISCHE PATENTSCHRIFT

(11) **EP 2 573 423 B1**
(45) Veröffentlichungstag und Bekanntmachung des Hinweises auf die Patenterteilung: **28.09.2016**
(21) Anmeldenummer: 12180562.6
(22) Anmeldetag: 15.08.2012
(51) Int. Cl.: F16H 7/12

(54) **Riemenspannvorrichtung für einen Riementrieb und Aggregatanordnung mit Riemenspannvorrichtung**
Belt tensioning device for a belt drive and machine arrangement with belt tensioning device
Tendeur de courroie pour entrainement par courroie et arrangement de machine avec tendeur de courroie

(30) Priorität: 22.09.2011 DE 102011053869
(43) Veröffentlichungstag der Anmeldung: 27.03.2013
(73) Patentinhaber: Muhr und Bender KG, 57439 Attendorn (DE)
(72) Erfinder: Schauerte, Stefan, 57439 Attendorn (DE); Pfeifer, Simon, 58840 Plettenberg (DE); Jud, Joachim, 57567 Daaden (DE); Jung, Manfred, 56457 Westerburg (DE)
(74) Vertreter: Oberwalleney, Stephan

(56) Entgegenhaltungen:
- DE-A1- 19 631 507
- DE-A1- 19 926 615
- DE-C- 508 156
- JP-A- 3 028 551
- US-A- 4 758 208
- US-A1- 2010 144 473
- "Handbook of spring design" In: "Handbook of spring design", 1 January 2002 (2002-01-01), SMI, XP055124891,

## Beschreibung

Die Erfindung betrifft eine Riemenspannvorrichtung für einen Riementrieb, der einen endlosen Riemen und zumindest zwei Riemenscheiben umfasst, von denen eine als Antrieb und eine als Abtrieb des Riementriebs fungieren kann. Derartige Riementriebe kommen insbesondere an Verbrennungsmotoren eines Kraftfahrzeugs zum Antreiben von Nebenaggregaten zum Einsatz, wobei eine erste Riemenscheibe auf der Kurbelwelle des Verbrennungsmotors sitzt und den Riemen antreibt. Weitere Riemenscheiben sind den Nebenaggregaten zugeordnet, wie beispielsweise Wasserpumpe, Lichtmaschine oder Klimaanlagenkompressor, und werden vom Riemenantrieb drehend angetrieben. Bei herkömmlichen Riementrieben sind die Nebenaggregate als Verbraucher ausgelegt, das heißt sie werden von der Riemenscheibe der Kurbelwelle über den Riemen angetrieben. Dabei ist zwischen der Kurbelwelle und dem in Umlaufrichtung des Riemens benachbarten Aggregat, in der Regel der Generator, das Lostrum ausgebildet. Um hier eine ausreichende Umschlingung des Riemens um die Riemenscheibe zu gewährleisten, wird der Riemen mittels einer Spannrolle der Riemenspannvorrichtung vorgespannt.

Es sind auch Riementriebe bekannt, bei denen als weiteres Nebenaggregat ein Startergenerator in den Riementrieb integriert ist, das heißt ein Elektromotor, der je nach Betriebszustand als Starter (Anlasser) oder Lichtmaschine (Generator) betrieben werden kann. Im Normal- oder Motorbetrieb ist die Riemenscheibe an der Kurbelwelle die treibende Scheibe, während der Startergenerator wie auch die übrigen Aggregate angetrieben werden. Im Start- oder Anlasserbetrieb treibt der Startergenerator über die zugehörige Riemenscheibe die Kurbelwelle an, um den Verbrennungsmotor zu starten. Bei solchen Riementrieben mit Startergenerator als Nebenaggregat, findet zwischen Motorbetrieb einerseits und Anlasserbetrieb andererseits ein Wechsel zwischen Zugtrum und Lostrum zu beiden Seiten der Riemenscheibe des Startergenerators statt. Es ist demnach erforderlich, federbelastete Spannrollen für beide der genannten Trums vorzusehen, von denen jeweils eine am Lostrum unter Federkraft wirksam wird, während die andere vom gespannten Zugtrum zurückgedrängt wird.

Aus der EP 0 858 563 B1 ist eine Spanneinrichtung mit einer ortsfesten Spannarmachse bekannt. Die Spannarmachse ist mit einem Stützflansch versehen, der zur Anlage an einen Motorblock vorgesehen ist. Auf einem Ende der Spannarmachse ist ein Spannarm mittels eines kegeligen Gleitlagers drehbar gelagert. Eine koaxial angeordnete Schraubendrehfeder ist einerseits an dem Stützflansch und andererseits an einer spannarmfesten Stütze unter Ausübung einer axialen Druckkraft und einer Torsionskraft eingespannt.

Aus der DE 10 2004 047 422 A1 ist eine Riemenspannvorrichtung mit einem Aufnahmegehäuse und einer darin koaxial einliegenden Nabe sowie mit einem Spannarm bekannt. Aufnahmegehäuse und Nabe sind gegeneinander drehbar gelagert und mit einer schraubenförmigen Torsionsfeder gegeneinander mit Vorspannung abgestützt. Es ist eine Dämpfungsvorrichtung vorgesehen, die eine am Umfang geschlitzte Dämpfungsbuchse und eine an die Dämpfungsbuchse angepasste Bandfeder umfasst.

Aus der EP 2 128 489 A2 ist eine Riemenspannvorrichtung für einen Riementrieb mit Starter-Generator bekannt. Die Riemenspannvorrichtung weist ein Gehäuse auf, in dem zwei Spannarme um eine gemeinsame Schwenkachse schwenkbar gelagert sind. Die Spannarme sind mit Federmitteln gegeneinander abgestützt. Das Gehäuse ist bei an den Starter-Generator montierter Antriebsriemenscheibe dadurch montierbar, dass das Gehäuse in einem die Antriebswelle des Starter-Generators umgebenden Ringbereich berührungsfrei gegenüber dem Starter-Generator ist.

Aus der US 4 758 208 ist eine Riemenspannanordnung für einen Riementrieb mit Starter-Generator bekannt. Das Gehäuse des Starter-Generators ist am Motorblock befestigt, und zwar so, dass das Gehäuse um die Drehachse der Antriebsscheibe begrenzt drehbar ist. Die Riemenspannanordnung umfasst zwei Spannarme, die scherenartig relativ zueinander um die Antriebswelle schwenkbar sind. Zwischen den Spannarmen ist eine Spannfeder angeordnet, welche die beiden Spannarme aufeinander zu beaufschlagt.

Aus der DE 196 31 507 A1 ist eine Spannvorrichtung für einen Riementrieb bekannt, mit einem topfförmigen Gehäuseteil und mit einem Hebel, der um das Gehäuseteil schwenkbar ist und an seinem Ende eine drehbare Spannrolle trägt. In dem Ringraum des topfförmigen Gehäuseteils ist ein Paket von drei mehrlagigen Federn angeordnet. Am aggregatseitigen Ende des Gehäuseteils ist eine Reibplatte drehfest angeschlossen, welche eine Bewegungsdämpfung für den Hebel bildet. Die für die Dämpfung erforderliche Anpresskraft wird durch die drei Federn aufgebracht.

Aus der DE 508 156 C ist ein Spannrollengetriebe mit einem zur Motorwelle gleichachsig gelagerten Spannrollenarm bekannt. Der Spannrollenarm ist um einen halsförmigen Ansatz drehbar gelagert und wird durch eine am Zapfen des Arms angreifende Feder gegen das zuziehende Trum des zu spannenden Riemens gedrückt.

Aus der JP 3 028 551 A, welche den nächsten Stand der Technik offenbart, ist ein Riemenspanner mit einem Spannarm bekannt, der um einen Nabenabschnitt einer Riemenscheibe drehbar gelagert und über eine Feder elastisch vorgespannt ist.

Aus der DE 199 26 615 A1 ist eine Spanneinrichtung für Zugmittel zum Anbringen an einem Aggregat mit Antriebswelle bekannt. Die Spanneinrichtung umfasst zwei um eine gemeinsame Achse und gegeneinander drehbar gelagerte Spannarme, die mittels einer Schraubenfeder gegeneinander federbelastet sind.

Aus der US 2010/0144473 A1 ist ein Spanner mit einem Grundkörper und einen Arm bekannt, an dem eine Rolle drehbar gelagert ist. Eine Torsionsfeder mit drei Windungen ist mit einem ersten Ende am Arm in Eingriff und mit einem zweiten Ende am Grundkörper. Der Arm ist exzentrisch zu einer mit dem Grundkörper verbundenen Hülse schwenkbar.

In dem Handbuch "Handbook of Spring Design", 2002, SMI, XP055124891 sind Auslegungsformeln und Konstruktionsmethoden für Torsionsfedern beschrieben. Es ist ferner eine tabellarische Übersicht dargestellt, in der die Winkeltoleranzen von Torsionsfedern für verschiedene Anzahlen von Windungen bzw. verschiedene Federindizes (Verhältnis von Federdurchmesser dividiert durch den Drahtdurchmesser) angegeben sind.

Der vorliegenden Erfindung liegt die Aufgabe zugrunde, eine Riemenspannvorrichtung für einen Riementrieb vorzuschlagen, die kompakt baut und die unabhängig von der Konstruktion beziehungsweise den Bauraumverhältnissen des Hauptantriebs ist. Die Aufgabe besteht weiter darin, eine Aggregatanordnung mit einer solchen Riemenspannvorrichtung vorzuschlagen, die einen geringen Bauraum in Anspruch nimmt.

Die Lösung besteht in einer Riemenspannvorrichtung für einen Riementrieb, wobei der Riementrieb zumindest ein Aggregat mit einem Gehäuse, einer Antriebswelle und einer Riemenscheibe, sowie einen endlosen Riemen zum Antreiben der Riemenscheibe aufweist, umfassend einen Grundkörper, der mit dem Aggregat fest verbindbar ist; genau einen Spannarm, der relativ zum Grundkörper um eine Schwenkachse (A) schwenkbar gelagert und über genau eine Torsionsfeder gegenüber dem Grundkörper in Umfangsrichtung abgestützt ist; sowie eine Spannrolle, die an dem Spannarm um eine Drehachse (B) drehbar gelagert ist und zum Spannen des Riemens dient; wobei die Riemenspannvorrichtung derart gestaltet ist, dass - in montiertem Zustand der Riemenspannvorrichtung an das Aggregat - die Schwenkachse des Spannarms innerhalb des Außendurchmessers der Riemenscheibe des Aggregats angeordnet ist, und dass die Torsionsfeder in Form einer Schraubenfeder gestaltet ist, die maximal drei volle Windungen aufweist, wobei das Verhältnis von Nenndurchmesser der Schraubenfeder zu axialer Länge der Schraubenfeder im Einbauzustand größer als 4,0 ist.

Das Aggregat kann prinzipiell jede Maschine sein, die Teil des Riementriebes ist, das heißt insbesondere jedes der vom Hauptmotor des Kraftfahrzeugs angetriebenen Nebenaggregate. Insofern kann das Aggregat auch als Arbeitsmaschine bezeichnet werden. Insbesondere ist vorgesehen, dass das Aggregat in Form eines Generators gestaltet ist, mit dem die Riemenspannvorrichtung fest verbindbar beziehungsweise fest verbunden ist. Es versteht sich jedoch, dass die erfindungsgemäße Riemenspannvorrichtung auch an jedem beliebigen anderen Nebenaggregate des Riementriebs vorgesehen werden kann, wie beispielsweise an einer Wasserpumpe. Mit "fest verbindbar" ist eine Ausführungsform mit umfasst, bei der die Riemenspannvorrichtung als separate Baueinheit hergestellt und nachträglich mit der Arbeitsmaschine verbunden wird, beispielsweise mittels einer Schraubverbindung. Mit "fest verbunden" ist eine Ausführungsform mit umfasst, bei der die Riemenspannvorrichtung mit der Arbeitsmaschine fest verbunden ist und insbesondere eine Baueinheit mit dieser bildet. Die Verbindung der Riemenspannvorrichtung kann beispielsweise auf einer Frontplatte des Aggregats oder einer anliegenden Baugruppe erfolgen. Bevorzugt wird die Riemenspannvorrichtung unmittelbar an das Aggregat beziehungsweise ein Bauteil des Aggregats montiert.

Dadurch, dass die Riemenspannvorrichtung unmittelbar an das Aggregat montierbar ist, wird in vorteilhafter Weise eine sehr kompakte Konstruktion erreicht. Die Riemenspannvorrichtung kann insbesondere stirnseitig an das Aggregat angeordnet sein, so dass kein gesonderter Bauraum im Motorraum zwischen Kurbelwelle und Aggregat zur Verfügung gestellt werden muss. Darüber hinaus sind keine weiteren Verbindungsmittel für die Riemenspannvorrichtung am Motorblock erforderlich. Insgesamt kann die Riemenspannvorrichtung unabhängig vom sogenannten Packaging beziehungsweise den Bauraumverhältnissen des Motors ausgelegt werden. Dadurch, dass die Schwenkachse des Spannarms innerhalb des Außendurchmessers der Riemenscheibe angeordnet ist, liegt der Riemenspanner in Axialansicht innerhalb einer Einhüllenden des Aggregats, so dass der radiale Bauraum gering ist.

Nach einer bevorzugten Ausgestaltung ist der Grundkörper derart gestaltet, dass - in montiertem Zustand der Riemenspannvorrichtung an das Aggregat - die Schwenkachse des Spannarms innerhalb des Außendurchmessers der Antriebswelle, insbesondere koaxial zur Antriebsdrehachse, angeordnet ist. Auf diese Weise ergibt sich eine besonders kompakte Konstruktion.

Der Spannarm ist gegenüber dem Grundkörper mittels der Torsionsfeder in Drehrichtung abgestützt, wobei die Torsionsfeder den Spannarm in Richtung Riemen beaufschlagt, um diesen zu spannen. Die Torsionsfeder ist erfindungsgemäß in Form einer Schraubenfeder gestaltet, die maximal drei volle Windungen aufweist. Hiermit ergibt sich ein axial kompakter Aufbau. Besonders günstig ist es, wenn die Schraubenfeder insbesondere maximal zwei volle Windungen, besonders bevorzugt zwischen einer und zwei Windungen, aufweist. Im Verhältnis zum Nenndurchmesser ist die axiale Länge der Schraubenfeder gering, das heißt der Nenndurchmesser der Schraubenfeder ist verhältnismäßig groß. Besonders günstig für eine flachbauende Konstruktion ist es, wenn das Verhältnis von Nenndurchmesser der Schraubenfeder zu axialer Länge der Schraubenfeder, im Einbauzustand der Schraubenfeder, größer als 4,0, vorzugsweise größer als 5,0 ist. Hiermit wird ermöglicht, dass die Riemenspannvorrichtung stirnseitig an das Aggregat angebracht werden kann, ohne zusätzlichen Bauraum im Umfeld des Aggregats beziehungsweise zwischen Kurbelwelle und Aggregat zu beanspruchen. Vorzugsweise ist das Verhältnis von Nenndurchmesser der Schraubenfeder zu axialer Länge der Schraubenfeder, im Einbauzustand, kleiner als 9,0, insbesondere kleiner als 8,0 oder kleiner als 7,0. Für die Auslegung des Größenverhältnisses der Schraubenfeder lässt sich jede der genannten Untergrenzen mit jeder der genannten Obergrenzen kombinieren. Es versteht sich, dass das genannte Verhältnis zwischen Nenndurchmesser und axialer Länge der Schraubenfeder auch vom Drahtdurchmesser des Federdrahts abhängt. Je größer der Drahtdurchmesser, desto steifer ist die Feder, das heißt desto kleiner kann die axiale Länge beziehungsweise der Durchmesser der Schraubenfeder ausgelegt sein, und umgekehrt.

Nach einer ersten Möglichkeit ist die Riemenspannvorrichtung so gestaltet, dass die Lagerung des Spannarms am Grundkörper von dem Aggregat aus betrachtet hinter der Riemenebene liegt. Hiermit ist gemeint, dass zumindest eine Mittelebene des Lagers gegenüber einer Mittelebene des Riemens in Richtung Motorraum axial versetzt angeordnet ist. Diese Ausführungsform eignet sich besonders für eine Riemenspannvorrichtung, welche eine separate Baugruppe darstellt, die nachträglich mit dem Aggregat über geeignete Befestigungsmittel verbunden wird, beispielsweise mittels einer Schrauben-Flansch-Verbindung. Nach einer bevorzugten Ausgestaltung sind die Befestigungsmittel in Form von Flanscherweiterungen des Grundkörpers gestaltet, welche vom ringförmigen Gehäuse nach radial außen weisen. Die genannten Befestigungsmittel liegen vorzugsweise in einem Umfangsbereich, der dem Spannarm und dem von der Riemenscheibe wegführenden Antriebsriemen zumindest etwa gegenüberliegen. Für eine zuverlässige Befestigung der Riemenspannvorrichtung an dem Aggregat ist es günstig, wenn die Befestigungsmittel in Axialansicht auf die Riemenscheibe über einen Umfangsabschnitt von mehr als 90° und weniger als 270°, insbesondere von etwa 150°bis 210° erstrecken.

Nach einer zweiten Möglichkeit ist die Riemenspannvorrichtung so gestaltet, dass die Lagerung des Spannarms am Grundkörper im Bereich zwischen dem Gehäuse und der Riemenscheibe des Aggregats liegt. Hiermit ist gemeint, dass eine Mittelebene des Lagers zwischen dem Aggregat und der Mittelebene des Riemens angeordnet ist. Dies gilt auch für die Torsionsfeder, welche den Spannarm gegenüber dem Grundkörper vorspannt, welche ebenfalls zwischen der Mittelebene des Riemens und dem Aggregat liegt. Diese Ausführungsform eignet sich besonders für eine Riemenspannvorrichtung, welche mit dem Aggregat als eine Baueinheit gestaltet ist. Nach einer bevorzugten Ausgestaltung kann dabei vorgesehen sein, dass der Grundkörper des Riemenspanners mit dem Gehäuse des Aggregats einteilig gestaltet ist. Auf diese Weise wird die Anzahl der Bauteile gering gehalten, der Fertigungs- und Montageaufwand wird reduziert und es ergibt sich ein besonders kompakter Aufbau.

Nach einer bevorzugten Ausführungsform, die für beide Möglichkeiten gilt, weist der Grundkörper eine Stützfläche auf, gegen welche die Torsionsfeder axial abgestützt ist, wobei die Stützfläche in montiertem Zustand zumindest teilweise in axialer Überdeckung mit der Antriebswelle ist. Hiermit ist gemeint, dass eine durch die Stützfläche aufgespannte Ebene die Antriebswelle schneidet. Die Stützfläche des Grundkörpers ist vorzugsweise rampenförmig gestaltet, wobei die Steigung in Umfangsrichtung an die Steigung der Schraubenfeder angepasst ist. Die Torsionsfeder ist vorzugsweise mit axialer Vorspannung zwischen dem Spannarm und dem Grundkörper wirksam eingebaut. Ein erstes Ende der Torsionsfeder ist am Grundkörper axial und in Umfangsrichtung abgestützt. Das zweite Ende der Torsionsfeder ist am Spannarm axial und in Umfangsrichtung abgestützt. Die zur axialen Abstützung dienende Stützfläche des Spannarms ist in Umfangsrichtung vorzugsweise rampenförmig gestaltet, wobei die Steigung der Stützfläche an die Steigung der Schraubenfeder angepasst ist.

Es ist insbesondere vorgesehen, dass der Grundkörper eine äußere Lagerfläche aufweist, die vorzugsweise zylindrisch ist, auf welcher das Lager zur Lagerung des Spannarms aufsitzt. Die Torsionsfeder ist vorzugsweise koaxial um das Lager herum angeordnet, wobei die Torsionsfeder und das Lager sich zumindest teilweise axial überdecken. Dies trägt zu einer kurzen axialen Baugröße der Riemenspannvorrichtung bei. Nach einer bevorzugten Weiterbildung ist das Lager im Halblängsschnitt betrachtet L-förmig gestaltet und weist einen flanschförmigen Abschnitt zur Axiallagerung und einen hülsenförmigen Abschnitt zur Radiallagerung des Spannarms gegenüber dem Grundkörper auf. Das Lager kann beispielsweise in Form eines Gleitlagers, beispielsweise aus Kunststoff oder einem anderen reibungsarmen Werkstoff, wie Bronze, gestaltet sein. Es ist jedoch auch die Verwendung eines Wälzlagers denkbar. Der Spannarm ist in axialer Richtung vom Grundkörper weg mittels eines Axiallagers relativ zum Grundkörper axial abgestützt. Für eine gute Abstützung der zwischen Torsionsfeder und Spannarm wirkenden Axialkräfte ist es günstig, wenn das Axiallager zumindest teilweise eine radiale Überdeckung mit der Torsionsfeder aufweist. Das Axiallager kann beispielsweise an einer fest mit dem Grundkörper verbundenen Axialscheibe abgestützt sein.

Nach einer bevorzugten Ausgestaltung weist der Grundkörper eine Öffnung auf, in welche die Antriebswelle in montiertem Zustand zumindest teilweise eintaucht. Hiermit ist gemeint, dass zumindest ein Teilabschnitt der Antriebswelle eine axiale Überdeckung mit der die Öffnung umgebenden Wandung des Grundkörpers hat. Diese Ausgestaltung trägt zu einer axial kurzbauenden Konstruktion bei. In günstiger Weiterbildung ist die Öffnung als Durchgangsöffnung gestaltet, womit die Montierbarkeit der Riemenscheibe auf der Antriebswelle beziehungsweise der Riemenspannvorrichtung an dem Aggregat vereinfacht werden kann. Die Durchgangsöffnung des Grundkörpers hat einen Innendurchmesser, der vorzugsweise größer als der Außendurchmesser der Antriebswelle, insbesondere größer, als der Außendurchmesser der Riemenscheibe. Durch diese Ausgestaltung kann die Riemenspannvorrichtung beziehungsweise der Spannarm einfach und bequem an das Aggregat angeschlossen werden. Dabei wird die Riemenspannvorrichtung beziehungsweise der Spannarm auf das Aggregat aufgesetzt, wobei die Antriebswelle des Aggregats in die Durchgangsöffnung des Grundkörpers beziehungsweise des Spannarms eintaucht. Diese Konstruktion eignet sich insbesondere für die zweite Möglichkeit mit zwischen dem Aggregat und dem Riemen angeordneter Lagerung für die Riemenspannvorrichtung, wo sich durch einteilige Gestaltung des Grundkörpers mit dem Gehäuse ein besonders kompakter Aufbau ergibt. Die genannte Konstruktion mit Durchgangsöffnung im Spannarm eignet sich jedoch auch für die erste Möglichkeit. Wenn der Innendurchmesser der Durchgangsöffnung größer ist, als der Außendurchmesser der Riemenscheibe, kann die Montage der Riemenspannvorrichtung auf einfache Weise bei bereits montierter Riemenscheibe erfolgen.

Die Lösung der obengenannten Aufgabe besteht weiter in einer Aggregatanordnung für einen Riementrieb, umfassend ein Aggregat mit einem Gehäuse, einer Antriebswelle und einer Riemenscheibe, sowie eine Riemenspannvorrichtung, die nach einer oder mehrerer der obengenannten Ausführungsformen gestaltet ist, wobei der Grundkörper der Riemenspannvorrichtung mit dem Gehäuse des Aggregats fest verbunden ist. Hiermit werden die oben bereits genannten Vorteile eines kompakten Aufbaus bei Unabhängigkeit der Bauraumverhältnisse im Motorraum erreicht, weswegen in diesem Zusammenhang auf obige Ausführungen verwiesen wird. Das Aggregat ist vorzugsweise ein Generator, kann jedoch auch jedes andere der vom Hauptmotor angetriebenen Nebenaggregate beziehungsweise Arbeitsmaschinen sein, beispielsweise eine Pumpe. Die genannte Anordnung umfasst das Aggregat und die damit verbundene Riemenspannvorrichtung; insofern kann sie auch als Aggregat-Riemenspann-Anordnung bezeichnet werden.

Wie oben beschrieben, können Riemenspannvorrichtung und Aggregat nach einer ersten Möglichkeit als separate Baueinheiten gestaltet sein, die nachträglich über geeignete Verbindungsmittel miteinander verbunden werden, beispielsweise mittels Schraubverbindungen. Alternativ hierzu können Riemenspannvorrichtung und Aggregat gemeinsam als eine Baueinheit gestaltet sein. Hier ist es vom Aufbau her günstig, wenn der Grundkörper der Riemenspannvorrichtung integral mit dem Gehäuse des Generators ausgebildet ist.

Bevorzugte Ausführungsbeispiele der Erfindung werden nachfolgend anhand der Zeichnungsfiguren erläutert. Hierin zeigt:
- Figur 1: eine erfindungsgemäße Riemenspannvorrichtung in einer ersten Ausführungsform in Explosionsdarstellung;
- Figur 2: die Riemenspannvorrichtung gemäß Figur 1 in perspektivischer Ansicht mit Antriebsriemenscheibe;
- Figur 3: die Riemenspannvorrichtung gemäß Figur 1 im Längsschnitt;
- Figur 4: eine erfindungsgemäße Anordnung mit einer erfindungsgemäßen Riemenspannvorrichtung gemäß Figur 1 in perspektivischer Ansicht;
- Figur 5: eine erfindungsgemäße Anordnung mit einer erfindungsgemäßen Riemenspannvorrichtung in einer zweiten Ausführungsform in perspektivischer Ansicht; und
- Figur 6: die Anordnung gemäß Figur 5 im Längsschnitt.

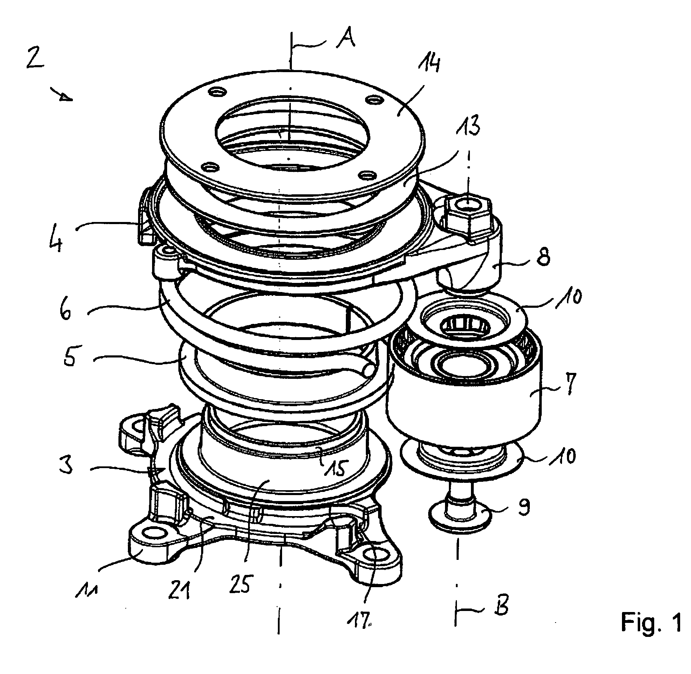

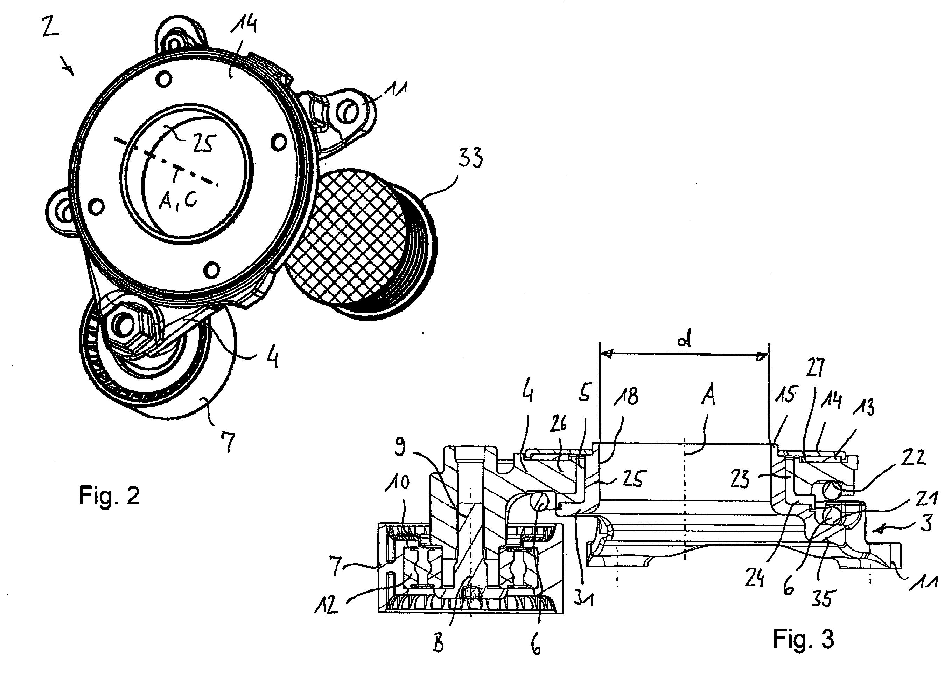

Die Figuren 1 bis 3, welche im folgenden gemeinsam beschrieben werden, zeigen eine erfindungsgemäße Riemenspannvorrichtung in einer ersten Ausführungsform. Die Riemenspannvorrichtung 2 umfasst einen Grundkörper 3, der an einem Aggregat oder einem mit dem Aggregat verbundenen Teil befestigt werden kann, einen Spannarm 4, der relativ zum Grundkörper 3 mittels eines Lagers 5 um eine Schwenkachse A schwenkbar gelagert und über eine Torsionsfeder 6 gegenüber dem Grundkörper 3 in Umfangsrichtung abgestützt ist. Zur Befestigung des Grundkörpers 3 hat dieser drei nach radial außen vorstehende Flanschabschnitte 11 mit Bohrungen, durch welche Schrauben zur Befestigung an einem Aggregat 28 durchgesteckt werden können.

Der Spannarm 4 trägt an einem freien Endabschnitt eine Spannrolle 7, die um eine zur Schwenkachse A parallele Drehachse B drehbar ist. Die Spannrolle 7 ist an einem Lagerzapfen 8 des Spannarms 4 drehbar gelagert und mittels einer Schraube 9 an diesem befestigt. Axial benachbart zur Spannrolle 7 sind ferner zwei Scheiben 10 erkennbar, welche das Lager 12 vor eindringendem Schmutz schützen. Der Spannarm 4 ist über eine Anlaufscheibe 13, die ein Axiallager für den Spannarm 4 bildet, an einer Axialscheibe 14 axial abgestützt. Dabei ist die Axialscheibe 14 fest mit dem Grundkörper 3 verbunden. Dies erfolgt vorliegend durch Umbördeln eines Bundes 15 des Grundkörpers 3, nachdem Torsionsfeder 6, Lager 5, Spannarm 4, Anlaufscheibe 13 und Axialscheibe 14 auf den Grundkörper 3 montiert worden sind. Der Spannarm 4 liegt zumindest etwa in einer Ebene mit der Lagerung 5, so dass der axiale Bauraum gering ist.

Die Torsionsfeder 6 ist in Form einer Schraubenfeder gestaltet. Ein erstes Ende 16 der Schraubenfeder 6 ist nach radial außen gebogen und an einer entsprechenden Anlagefläche 17 des Grundkörpers 3 in Umfangsrichtung abgestützt. Das entgegengesetzte zweite Ende der Schraubenfeder 6 ist an einer entsprechenden Anlagefläche des Spannarms 4 in Umfangsrichtung abgestützt. Die Schraubenfeder 6 bewirkt eine Verspannung des Spannarms 4 gegenüber dem Grundkörper 3, so dass der Riemen des Riementriebes vorgespannt wird.

Die Schraubenfeder 6 ist koaxial außerhalb zur Lagerung 5 für den Spannarm 4 angeordnet. Dabei überdecken sich die Schraubenfeder 6 und die Lagerung zumindest mit einem Teilabschnitt in axiale Richtung, um den Bauraum in axiale Richtung gering zu halten. Es ist insbesondere in Figur 1 erkennbar, dass die Schraubenfeder einen verhältnismäßig großen Durchmesser in Bezug auf die axiale Länge aufweist. Die Anzahl der Windungen ist größer als eins und kleiner als zwei. Vorzugsweise beträgt die Umfangserstreckung der Schraubenfeder zwischen 540° und 690°. Das Verhältnis von Nenndurchmesser der Schraubenfeder zur axialer Länge beträgt, im Einbauzustand der Schraubenfeder, in welchem die Schraubenfeder axial vorgespannt ist, zwischen 3,0 und 9,0, insbesondere zwischen 5,0 und 8,0. Es versteht sich, dass die genannten Werte nicht einschränkend gemeint sind. Innerhalb der genannten Bereiche sind alle Zwischenbereiche denkbar. Prinzipell lassen sich auch - je nach Bauraumverhältnissen - größere Werte als 9,0 realisieren, womit die Feder dann im Verhältnis zum Durchmesser extrem kurzbauend in axiale Richtung wäre. Weiter versteht es sich, dass das genannte Verhältnis von Federdurchmesser zu axialer Länge im Einbauzustand unter anderem auch vom Drahtdurchmesser des Federdrahts abhängt. Je größer der Drahtdurchmesser, desto kleiner kann die axiale Länge der Schraubenfeder ausgelegt sein.

Es ist weiter erkennbar, dass die Riemenspannvorrichtung 2 beziehungsweise der Grundkörper 3 eine Durchgangsöffnung 18 aufweisen, die koaxial zur Längsachse A ist. Auf diese Weise lässt sich der Grundkörper 3 einfach an ein Aggregat 28 anschrauben, wobei ein Ende der Antriebswelle gegebenenfalls in die Durchgangsöffnung 18 eintauchen kann. Insgesamt wird somit eine axial kurz bauende Anordnung erreicht. Der Innendurchmesser d der Durchgangsbohrung 18 ist größer als der Außendurchmesser der Antriebswelle 19. Vorliegend entspricht der Innendurchmesser d etwa dem Durchmesser der Riemenscheibe, wobei es sich versteht, dass dieser auch größer oder kleiner als der Außendurchmesser der Riemenscheibe sein kann. Der Grundkörper 3 hat einen Hülsenabschnitt 25 zur Aufnahme des Lagers 5, an den sich in Richtung zu den Befestigungsmitteln 11 ein erster gestufter Abschnitt 31 zur axialen Abstützung des Lagers 5, und ein zweiter gestufter Abschnitt 35 anschließt. Der zweite gestufte Abschnitt 35, welcher gegenüber dem ersten gestuften Abschnitt 31 auf einem größeren Durchmesser liegt, umfasst einerseits die Stützfläche 21 für die Torsionsfeder 6 und trägt ferner die Befestigungsmittel 11.

Die Schraubenfeder 6 ist mit axialer Vorspannung zwischen einer Stützfläche 21 des Grundkörpers 3 und einer Stützfläche 22 des Spannarms 4 eingesetzt. Auf diese Weise wird der Spannarm 4 axial gegen die Scheibe 14 beaufschlagt, so dass die Entstehung ungewünschter Geräusche verhindert wird. Die Stützfläche 21, erstreckt sich über einen Umfangsteilabschnitt des Grundkörpers 3. Dabei liegt zumindest ein Teilabschnitt der Stützfläche 21 in einer Ebene, welche mit der Antriebswelle eine axiale Überdeckung aufweist. Die Stützfläche 21 des Grundkörpers 3 hat in Umfangsrichtung eine Rampenform, die an die Steigung der Schraubenfeder 6 angepasst ist. Dies gilt auch für die Stützfläche des Spannarms 4, an welcher die Schraubenfeder 6 mit ihrem entgegengesetzten Endabschnitt axial abgestützt ist.

Bei der vorliegenden Ausführungsform ist die Riemenspannvorrichtung 2 so gestaltet beziehungsweise angeordnet, dass die Lagerung 5 des Spannarm 4 am Grundkörper 3 aus Sicht des Aggregats 28 hinter der Riemenebene liegt. Als Riemenebene ist die Ebene definiert, welche durch die Riemenmitte in montiertem Zustand aufgespannt wird. Das Lager 5 ist im Halblängsschnitt betrachtet L-förmig gestaltet und weist einen hülsenförmigen Abschnitt und einen daran anschließenden, nach radial außen vorstehenden Flanschabschnitt auf. Das Lager 5 ist auf einen entsprechenden Hülsenabschnitt 25 des Grundkörpers 23 aufgeschoben. Dabei dient der hülsenförmige Abschnitt 23 zur radialen Abstützung, während der Flanschabschnitt 24 zur axialen Abstützung und Lagerung dient. Auf das Lager 5 ist wiederum der Spannarm 4 mit einem ringförmigen Lagerabschnitt 26 aufgeschoben. Der Spannarm 4 hat an seiner vom Grundkörper 3 weggerichteten Seite eine ringförmige Ausnehmung 27, die eine Aufnahme für die Anlaufscheibe 13 bildet. Die Anlaufscheibe 13 ist wiederum gegen die Axialscheibe 14 axial abgestützt und fungiert insofern als Axiallager. Als Werkstoff für das Lager kommt vorzugsweise ein reibungsarmer Kunststoff zum Einsatz, wobei andere Lagerformen nicht ausgeschlossen sind.

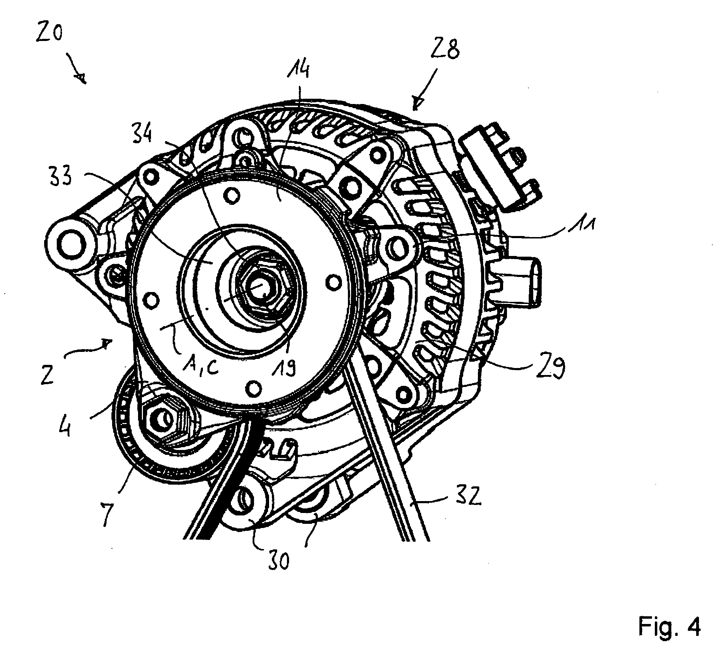

Figur 4 zeigt die erfindungsgemäße Riemenspannvorrichtung 2 gemäß den Figuren 1 bis 3 in montiertem Zustand an ein Aggregat 28. Dabei bilden die Riemenspannvorrichtung 2 und das Aggregat 28 gemeinsam eine Aggregatanordnung 20. Das Aggregat 28 ist vorliegend in Form eines Generators (Lichtmaschine) gestaltet. Es ist das Gehäuse 29 des Generators erkennbar, das über Befestigungsmittel 30 an einem Motorblock angeschlossen werden kann. Es versteht sich jedoch, dass das Aggregat auch eine andere Arbeitsmaschine sein kann, die Teil des Riementriebes ist, beispielsweise ein Nebenaggregat, wie eine Pumpe.

Die Riemenspannvorrichtung 2 ist stirnseitig an dem Generator 28 angebracht. Dies erfolgt mittels der umfangsverteilten Anschlussflansche 11, in welche Schrauben eingesteckt und mit dem Gehäuse 29 des Generators 28 verschraubt werden können. Es sind ferner der endlose Riemen 32 und die Riemenscheibe 33 erkennbar, die mittels einer Schraubverbindung 34 auf der Antriebswelle 19 des Generators 28 drehfest verbunden ist.

Der Grundkörper 3 beziehungsweise die Riemenspannvorrichtung 2 ist derart gestaltet, dass - in montiertem Zustand der Riemenspannvorrichtung 2 an das Aggregat 28 - die Schwenkachse A des Spannarms 4 innerhalb des Außendurchmessers der Antriebswelle 19, vorzugsweise zumindest etwa koaxial zur Antriebsdrehachse C, angeordnet ist. Durch diese Ausgestaltung ergibt sich eine besonders kompakte Konstruktion, wobei die Riemenspannvorrichtung 2 auf einfache Weise mit dem Generator 28 verbindbar ist.

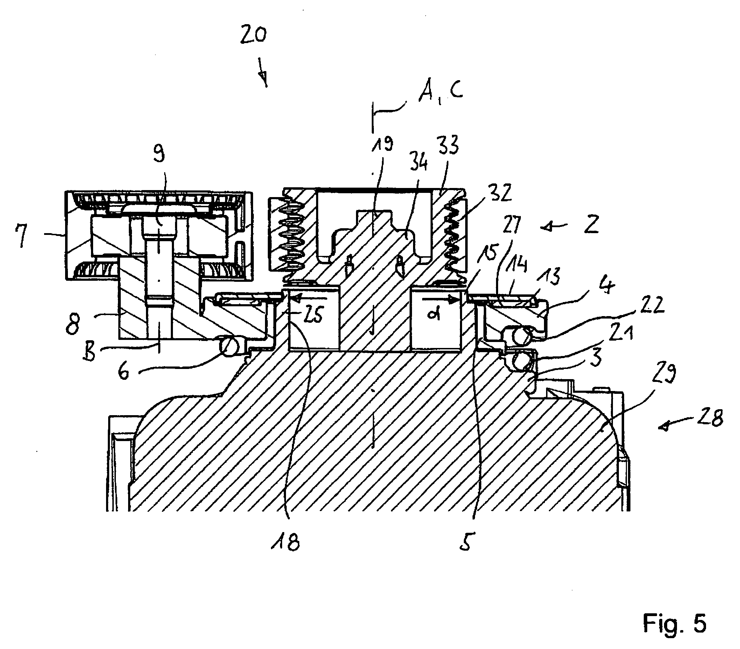

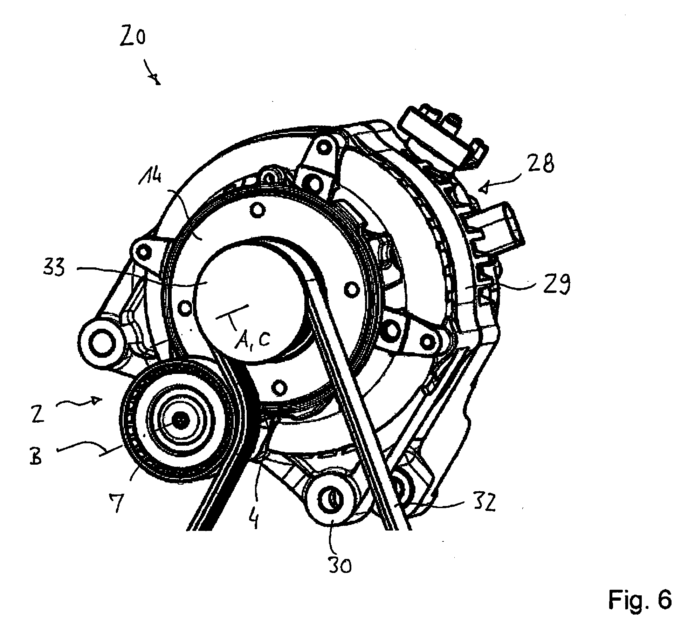

Die Figuren 5 und 6 zeigen eine erfindungsgemäße Riemenspannvorrichtung 2 beziehungsweise eine erfindungsgemäße Aggregatanordnung 20 in einer zweiten Ausführungsform. Diese entspricht weitestgehend der Ausführungsform gemäß den Figuren 1 bis 4, sodass hinsichtlich der Gemeinsamkeiten auf die obige Beschreibung Bezug genommen wird. Dabei sind gleiche beziehungsweise abgewandelte Bauteile mit gleichen Bezugsziffern versehen, wie bei der Ausführungsform gemäß den Figuren 1 bis 4. Im folgenden werden hauptsächlich die Unterschiede der vorliegenden Ausführungsformen erläutert.

Eine Besonderheit der vorliegenden Ausführungsform besteht darin, dass die Lagerung 5 der Riemenspannvorrichtung 2 axial zwischen dem Aggregat 28 und der Riemenscheibe 33 angeordnet ist. Der Lagerzapfen 8 für die Spannrolle 7 zeigt von dem Aggregat 28 weg. Es ist weiter erkennbar, dass der Grundkörper 3 der Riemenspannvorrichtung 2 einteilig mit dem Gehäuse 29 des Aggregats 28 ausgebildet ist. Dies hat in günstiger Weise eine Reduzierung der erforderlichen Bauteile zur Folge. Weiterhin lassen sich die Riemenspannvorrichtung 2 und das Aggregat 28 als eine Baueinheit vormontieren. Die Antriebswelle 19 des Aggregats 28 ist durch die Durchgangsöffnung 18 des Grundkörpers 3 hindurch geführt und trägt an ihrem freien Ende die Antriebsriemenscheibe 33, auf welcher der endlose Riemen 32 aufgezogen ist. Zur Befestigung der Riemenscheibe 33 ist eine Mutter 34 vorgesehen, welche auf die Antriebswelle 19 aufgeschraubt wird.

Die Torsionsfeder 6 stützt sich mit ihrem ersten Ende gegenüber dem Grundkörper 3 beziehungsweise dem Gehäuse 29 axial und in Umfangsrichtung ab und ist mit ihrem entgegengesetzten Ende gegenüber dem Spannarm 4 axial und in Umfangsrichtung abgestützt. Insgesamt wird mit der vorliegenden Ausführungsform die Anzahl der Bauteile gering gehalten, der Fertigungs- und Montageaufwand reduziert, so dass insgesamt eine kompakte Konstruktion erreicht wird, die hinsichtlich der Bauraumverhältnisse im Motorraum unabhängig ist.

### Bezugszeichenliste

- 2: Riemenspannvorrichtung
- 3: Grundkörper
- 4: Spannarm
- 5: Lager
- 6: Torsionsfeder
- 7: Spannrolle
- 8: Lagerzapfen
- 9: Schraube
- 10: Dichtscheibe
- 11: Anschlussflansch
- 12: Wälzlager
- 13: Anlaufscheibe
- 14: Axialscheibe
- 15: Hülsenansatz
- 16: Federende
- 17: Anlagefläche
- 18: Durchgangsbohrung
- 19: Antriebswelle
- 20: Aggregatanordnung
- 21: Stützfläche
- 22: Stützfläche
- 23: Hülsenabschnitt
- 24: Flanschabschnitt
- 25: Hülsenabschnitt
- 26: Lagerabschnitt
- 27: Ausnehmung
- 28: Aggregat
- 29: Gehäuse
- 30: Verbindungsmittel
- 31: gestufter Abschnitt
- 32: Riemen
- 33: Riemenscheibe
- 34: Mutter
- 35: gestufter Abschnitt

- A: Schwenkachse
- B: Drehachse
- C: Drehachse

## Patentansprüche

1. Riemenspannvorrichtung für einen Riementrieb, wobei der Riementrieb zumindest ein Aggregat (28) mit einem Gehäuse (29), einer Antriebswelle und einer Riemenscheibe (33), sowie einen endlosen Riemen (32) zum Antreiben der Riemenscheibe (33) aufweist, umfassend:
einen Grundkörper (3),
genau einem Spannarm (4), der relativ zum Grundkörper (3) um eine Schwenkachse (A) schwenkbar gelagert und über genau eine Torsionsfeder (6) gegen den Grundkörper (3) in Umfangsrichtung abgestützt ist, wobei die Torsionsfeder (6) in Form einer Schraubenfeder gestaltet ist, sowie eine Spannrolle (7), die an dem Spannarm (4) um eine Drehachse (B) drehbar gelagert ist und zum Spannen des Riemens (32) dient,
wobei die Riemenspannvorrichtung (2) derart gestaltet ist, dass - in montiertem Zustand der Riemenspannvorrichtung (2) an das Aggregat (28) - die Schwenkachse (A) des Spannarms (4) innerhalb des Außendurchmessers der Riemenscheibe (33) des Aggregats (28) angeordnet ist, wobei
der Grundkörper (3) mit dem Aggregat (28) fest verbindbar oder fest verbunden ist, und
dass die Schraubenfeder maximal drei volle Windungen aufweist, wobei das Verhältnis von Nenndurchmesser der Schraubenfeder zu axialer Länge der Schraubenfeder im Einbauzustand größer als 4,0 ist.

2. Riemenspannvorrichtung nach Anspruch 1,
**dadurch gekennzeichnet,**
**dass** der Grundkörper (3) derart gestaltet ist, dass - in montiertem Zustand - die Schwenkachse (A) des Spannarms (4) innerhalb des Außendurchmessers der Antriebswelle (19), insbesondere koaxial zur Antriebsdrehachse (C) der Antriebswelle (19), angeordnet ist.

3. Riemenspannvorrichtung nach Anspruch 1 oder 2,
**dadurch gekennzeichnet,**
**dass** die Schraubenfeder maximal zwei volle Windungen, aufweist.

4. Riemenspannvorrichtung nach Anspruch 3,
**dadurch gekennzeichnet,**
**dass** das Verhältnis von Nenndurchmesser der Schraubenfeder zu axialer Länge der Schraubenfeder im Einbauzustand größer als 5,0 ist.

5. Riemenspannvorrichtung nach einem der Ansprüche 1 bis 4,
**dadurch gekennzeichnet,**
**dass** der Grundkörper (3) eine Öffnung (18) aufweist, in welche die Antriebswelle (19) oder die Riemenscheibe (33) in montiertem Zustand zumindest teilweise eintaucht.

6. Riemenspannvorrichtung nach einem der Ansprüche 1 bis 5,
**dadurch gekennzeichnet,**
**dass** der Grundkörper (3) und das Gehäuse (29) als separate Bauteile gestaltet sind, welche über Verbindungsmittel (11) miteinander verbunden sind.

7. Riemenspannvorrichtung nach einem der Ansprüche 1 bis 5,
**dadurch gekennzeichnet,**
**dass** der Grundkörper (3) des Riemenspanners (2) und das Gehäuse (29) des Aggregats (28) einteilig gestaltet sind.

8. Riemenspannvorrichtung nach einem der Ansprüche 1 bis 7,
**dadurch gekennzeichnet,**
**dass** der Grundkörper (3) eine Stützfläche (21) aufweist, gegen welche die Torsionsfeder (6) axial abgestützt ist, wobei die Stützfläche (21) in montiertem Zustand zumindest teilweise in axialer Überdeckung mit der Riemenscheibe (33) ist.

9. Riemenspannvorrichtung nach Anspruch 8,
**dadurch gekennzeichnet,**
**dass** die Stützfläche (21) des Grundkörpers (3) zumindest einen rampenförmigen Teilabschnitt aufweist.

10. Riemenspannvorrichtung nach einem der Ansprüche 1 bis 9,
**dadurch gekennzeichnet,**
**dass** ein Lager (5) zur Lagerung des Spannarms (4) gegenüber dem Grundkörper (3) vorgesehen ist, wobei die Torsionsfeder (6) koaxial um das Lager (5) herum angeordnet ist, und wobei die Torsionsfeder (6) und das Lager (5) sich zumindest teilweise axial überdecken.

11. Riemenspannvorrichtung nach Anspruch 10,
**dadurch gekennzeichnet,**
**dass** das Lager (5) im Halblängsschnitt betrachtet L-förmig gestaltet ist und einen flanschförmigen Abschnitt (24) zur Axiallagerung und einen hülsenförmigen Abschnitt (23) zur Radiallagerung aufweist.

12. Riemenspannvorrichtung nach einem der Ansprüche 1 bis 11,
**dadurch gekennzeichnet,**
**dass** der Spannarm (4) in axialer Richtung vom Grundkörper (3) weg mittels eines Axiallagers (13) relativ zum Grundkörper (3) axial abgestützt ist, wobei das Axiallager (13) zumindest teilweise eine radiale Überdeckung mit der Torsionsfeder (6) aufweist.

13. Aggregatanordnung für einen Riementrieb, umfassend ein Aggregat (28) mit einem Gehäuse (29), einer Antriebswelle (19) und einer Riemenscheibe (33), sowie eine Riemenspannvorrichtung (2) nach einem der Ansprüche 1 bis 12, **dadurch gekennzeichnet, dass** der Grundkörper (3) der Riemenspannvorrichtung (2) mit dem Gehäuse (29) des Aggregats (28) fest verbunden oder fest verbindbar ist.

14. Aggregatanordnung nach Anspruch 13,
**dadurch gekennzeichnet,**
**dass** der Grundkörper (3) der Riemenspannvorrichtung (2) einteilig mit dem Gehäuse (29) des Aggregats (28) gestaltet ist, wobei die Riemenspannvorrichtung (2) und die Antriebsmaschine (28) eine vormontierbare Baueinheit bilden.

15. Aggregatanordnung nach Anspruch 13 oder 14,
**dadurch gekennzeichnet,**
**dass** das Aggregat (28) ein Generator ist.

## Claims

1. A belt tensioning device for a belt drive, wherein the belt drive comprises at least one apparatus (28) with a housing (29), a driveshaft and a belt pulley (33), as well as an infinite belt (32) for driving the belt pulley (33), comprising:
a base member (3),
exactly one tensioning arm (4) which is pivotably supported relative to the base member (3) around a pivot axis (A) and which is supported in circumferential direction against the base member(3), via exactly one torsion spring (6), wherein the torsion spring (6) is formed as a helical spring, and
a tensioning roller (7) which is rotatably supported at the tensioning arm (4) around an axis of rotation (B) and serves to tension the belt (32),
wherein the belt tensioning device (2) is designed such that, in the mounted condition of the belt tensioning device (2) on the apparatus (28), the pivot axis (A) of the tensioning arm (4) is arranged inside the outer diameter of the belt pulley (33) of the apparatus (28),
**characterised in**
**that** the base member (3) is firmly connected or connectable to the apparatus (28), and
**that** the helical spring comprises a maximum of three full windings, wherein the ratio of the nominal diameter of the helical spring relative to the axial length of the helical spring, in the mounted condition, is greater than 4.0.

2. A belt tensioning device according to claim 1,
**characterised in**
**that** the base member (3) is designed such that, in the mounted condition, the pivot axis (A) of the tensioning arm (4) is arranged inside the outer diameter of the driveshaft (19), more particularly coaxially relative to the rotational axis (C) of the driveshaft (19).

3. A belt tensioning device according to claim 1 or 2,
**characterised in**
**that** the helical spring comprises a maximum of two full windings.

4. A belt tensioning device according to claim 3,
**characterised in**
**that** the ratio of the nominal diameter of the helical spring relative to the axial length of the helical spring, in the mounted condition, is greater than 5.0.

5. A belt tensioning device according to any one of claims 1 to 4,
**characterised in**
**that** the base member (3) comprises an aperture (18), into which the driveshaft (19) or the belt pulley (33), in the mounted condition, at least partially extends into.

6. A belt tensioning device according to any one of claims 1 to 5,
**characterised in**
**that** the base member (3) and the housing (29) are provided as separate components which are connected to one another by connecting means (11).

7. A belt tensioning device according to any one of claims 1 to 5,
**characterised in**
**that** the base member (3) of the belt tensioning device (2) and the housing (29) of the assembly (28) are integrally formed.

8. A belt tensioning device according to any one of claims 1 to 7,
**characterised in**
**that** the base member (3) comprises a supporting face (21) against which the torsion spring (6) is axially supported, wherein the supporting face (21), at least partially, axially overlaps the belt pulley (33), in the mounted condition.

9. A belt tensioning device according to claim 8,
**characterised in**
**that** the supporting face (21) of the base member (3) comprises at least one ramp-shaped portion.

10. A belt tensioning device according to any one of claims 1 to 9,
**characterised in**
**that** a bearing (5) is provided for supporting the tensioning arm (4) relative to the base member(3), wherein the torsion spring (6) is arranged coaxially around the bearing (5) and wherein the torsion spring (6) and the bearing (5) at least partially axially overlap.

11. A belt tensioning device according to claim 10,
**characterised in**
**that** the bearing (5), if viewed in half a longitudinal section, is L-shaped and comprises a flange-shaped portion (24) for axial supporting purposes and comprises a sleeve-shaped portion (23) for radial supporting purposes.

12. A belt tensioning device according to any one of claims 1 to 11,
**characterised in**
**that**, in an axial direction away from the base member (3), the tensioning arm (4) is axially supported relative to the base member (3) by an axial bearing (13), wherein the axial bearing (13), at least partially, radially overlaps the torsion spring (6).

13. An apparatus arrangement for a belt drive, comprising: an apparatus (28) with a housing (29), a driveshaft (19) and a belt pulley (33); and
a belt tensioning device (2) according to any one of claims 1 to 12;
**characterised in**
**that** the base member (3) of the belt tensioning device (2) is firmly connected or firmly connectable to the housing (29) of the apparatus (28).

14. An apparatus arrangement according to claim 13,
**characterised in**
**that** the base member (3) of the belt tensioning device (2) is made in one piece with the housing (29) of the apparatus (28), wherein the belt tensioning device (2) and the apparatus (28) form a pre-assembled unit.

15. An apparatus arrangement according to claims 13 or 14,
**characterised in**
**that** the apparatus (28) is a generator.

## Revendications

1. Tendeur de courroie pour un entraînement par courroie, l'entraînement par courroie comportant au moins une machine (28) avec un boîtier (29), un arbre d'entraînement et une poulie à courroie (33), ainsi qu'une courroie sans fin (32) pour entraîner la poulie à courroie (33), comprenant :
un corps de base (3),
exactement un bras de tension (4) qui est logé pouvant pivoter par rapport au corps de base (3) autour d'un axe de pivotement (A) et est appuyé par le biais exactement d'un ressort à torsion (6) contre le corps de base (3) dans le sens périphérique, le ressort à torsion (6) étant conçu sous la forme d'un ressort hélicoïdal, ainsi
qu'un galet de tension (7), qui est logé sur le bras de tension (4) pouvant tourner autour d'un axe de rotation (B) et sert à tendre la courroie (32),
le tendeur de courroie (2) étant conçu de telle sorte qu'à l'état monté du tendeur (2) sur la machine (28), l'axe de pivotement (A) du bras de tension (4) est disposé à l'intérieur du diamètre extérieur de la poulie à courroie (33) de la machine (28),
**caractérisé en ce que**
le corps de base (3) peut être relié fixement ou est relié fixement à la machine (28), et
**en ce que** le ressort hélicoïdal comporte au maximum trois spires complètes, le rapport entre le diamètre nominal du ressort hélicoïdal et la longueur axiale du ressort hélicoïdal à l'état de montage est supérieur à 4,0.

2. Tendeur de courroie selon la revendication 1,
**caractérisé en ce que**
le corps de base (3) est conçu de telle manière qu'à l'état monté, l'axe de pivotement (A) du bras de tension (4) est disposé à l'intérieur du diamètre extérieur de l'arbre d'entraînement (19), en particulier coaxialement à l'axe d'entraînement (C) de l'arbre d'entraînement (19).

3. Tendeur de courroie selon la revendication 1 ou 2,
**caractérisé en ce que**
le ressort hélicoïdal comporte au maximum deux spires complètes.

4. Tendeur de courroie selon la revendication 3,
**caractérisé en ce que**
le rapport entre le diamètre nominal du ressort hélicoïdal et la longueur axiale du ressort hélicoïdal à l'état de montage est supérieur à 5,0.

5. Tendeur de courroie selon l'une quelconque des revendications 1 à 4,
**caractérisé en ce que**
le corps de base (3) comporte une ouverture (18) dans laquelle pénètre, à l'état monté, au moins en partie, l'arbre d'entraînement (19) ou la poulie à courroie (33).

6. Tendeur de courroie selon l'une quelconque des revendications 1 à 5,
**caractérisé en ce que**
le corps de base (3) et le boîtier (29) sont conçus comme des composants séparés, lesquels sont reliés entre eux par l'élément de liaison (11).

7. Tendeur de courroie selon l'une quelconque des revendications 1 à 5,
**caractérisé en ce que**
le corps de base (3) du tendeur de courroie (2) et le boîtier (29) de la machine (28) sont conçus en une seule pièce.

8. Tendeur de courroie selon l'une quelconque des revendications 1 à 7,
**caractérisé en ce que**
le corps de base (3) comporte une surface d'appui (21) contre laquelle le ressort à torsion (6) est axialement appuyé, la surface d'appui (21) étant, à l'état monté, au moins en partie, en recouvrement axial avec la poulie à courroie (33).

9. Tendeur de courroie selon la revendication 8,
**caractérisé en ce que**
la surface d'appui (21) du corps de base (3) comporte au moins une section partielle en forme de rampe.

10. Tendeur de courroie selon l'une quelconque des revendications 1 à 9,
**caractérisé en ce qu'**
un palier (5) est prévu pour loger le bras de tension (4) par rapport au corps de base (3), le ressort à torsion (6) étant disposé coaxialement autour du palier (5) et le ressort à torsion (6) et le palier (5) se recouvrant axialement au moins en partie.

11. Tendeur de courroie selon la revendication 10,
**caractérisé en ce que**
le palier (5), vu en coupe semi-longitudinale, est conçu en forme de L et comporte une section (24) en forme de bride pour le logement axial et une section en forme de manchon (23) pour le logement radial.

12. Tendeur de courroie selon l'une quelconque des revendications 1 à 11,
**caractérisé en ce que**
le bras de tension (4) est axialement appuyé, par rapport au corps de base (3), dans la direction axiale opposée au corps de base (3) au moyen d'un palier lisse (13), le palier lisse (13) comportant au moins en partie un recouvrement radial avec le ressort à torsion (6).

13. Arrangement de machine pour un entraînement par courroie, comprenant une machine (28) avec un boîtier (29), un arbre d'entraînement (19) et une poulie à courroie (33), ainsi qu'un tendeur de courroie (2) selon l'une quelconque des revendications 1 à 12, **caractérisé en ce que** le corps de base (3) du tendeur de courroie (2) est fixement relié ou peut être fixement relié au boîtier (29) de l'ensemble (28).

14. Arrangement de machine selon la revendication 13,
**caractérisé en ce que**
le corps de base (3) du tendeur de courroie (2) est conçu en une pièce avec le boîtier (29) de la machine (28), le tendeur de courroie (2) et la machine d'entraînement (28) formant un module pouvant être préalablement monté.

15. Arrangement de machine selon la revendication 13 ou 14,
**caractérisé en ce que**
la machine (28) est un générateur.
